(19) Europäisches Patentamt

European Patent Office

Office européen des brevets

(11) Veröffentlichungsnummer: **0 293 712 B1**

(12) **EUROPÄISCHE PATENTSCHRIFT**

(45) Veröffentlichungstag der Patentschrift: **07.10.92**

(21) Anmeldenummer: **88108230.9**

(22) Anmeldetag: **24.05.88**

Die Akte enthält technische Angaben, die nach dem Eingang der Anmeldung eingereicht wurden und die nicht in dieser Patentschrift enthalten sind.

(51) Int. Cl.⁵: **C09B 1/22**, C09B 67/10, C09B 1/00

(54) **Verfahren zur Herstellung von 4,4'-Diamino-1,1'-dianthrachinonyl-Pigmenten.**

(30) Priorität: **03.06.87 DE 3718519**
       **13.01.88 DE 3800683**

(43) Veröffentlichungstag der Anmeldung:
   **07.12.88 Patentblatt 88/49**

(45) Bekanntmachung des Hinweises auf die
   Patenterteilung:
   **07.10.92 Patentblatt 92/41**

(84) Benannte Vertragsstaaten:
   **CH DE FR GB LI**

(56) Entgegenhaltungen:
   **DE-B- 1 205 215**
   **GB-A- 1 408 653**
   **US-A- 3 194 820**

(73) Patentinhaber: **BAYER AG**

   **W-5090 Leverkusen 1 Bayerwerk(DE)**

(72) Erfinder: **Schütze, Detlef-Ingo, Dr.**
   **Roggendorfstrasse 51**
   **W-5000 Köln 80(DE)**
   Erfinder: **Steinbeck, Werner, Dr.**
   **Haferkamp 3**
   **W-5000 Köln 80(DE)**
   Erfinder: **Adams, Anton**
   **Kapellenstrasse 20**
   **W-5200 Siegburg-Kaldenauen(DE)**

## Beschreibung

Die Erfindung betrifft Verfahren zur Herstellung von 4,4'-Diamino-1,1'-dianthrachinonyl-Pigmenten, sowohl in deckender als auch in transparenter Form.

4,4'-Diamino-1,1'-dianthrachinonyl stellt wegen seines hohen Echtheitsniveaus ein wertvolles Rotpigment für das Färben von Lacken und Kunststoffen dar.

Verfahren zur Herstellung des Pigments sind seit langem bekannt (siehe z.B. DE-AS 1 205 215).

Zur Herstellung wird z.B. 1-Amino-4-bromanthrachinon-2-sulfonsäure in wäßrigsaurem Medium mit Kupferpulver oder Kupfersalzen zu 4,4'-Diamino-1,1'-dianthrachinonyl-3,3'-disulfonsäure umgesetzt. Diese wird isoliert und mit bis zu 90 %iger Schwefelsäure auf Temperaturen zwischen 120 bis 220° C erhitzt, wobei unter Abspaltung der Sulfonsäuregruppen das 4,4'-Diamino-1,1'-dianthrachinonyl entsteht. Das Pigment wird durch Eintragung der schwefelsauren Lösung in Eiswasser isoliert.

Nach dieser Verfahrensweise werden bevorzugt Pigmente erhalten, die in Lacken und Kunststoffen transparente Färbungen ergeben. Außerdem führt diese Verfahrensweise je nach Qualität der eingesetzten technischen 1-Amino-4-bromanthrachinon-2-sulfonsäure unter Umständen zu stark blutenden, stumpfen, blaustichigen Pigmenten, die durch aufwendige Operationen gereinigt werden müssen.

Ziel der vorliegenden Erfindung war es deshalb, ein Verfahren zu entwickeln, das unabhängig von der Qualität der technischen 1-Amino-4-bromanthrachinon-2-sulfonsäure zu neuen reinen deckenden oder transparenten 4,4'-Diamino-1,1'-dianthrachinonyl-Pigmenten führt.

Das erfindungsgemäße Verfahren zur Herstellung eines 4,4'-Diamino-1,1'-dianthrachinonyl-Pigments durch Desulfonierung von 4,4'-Diamino-1,1'-dianthrachinonyl-3,3' disulfonsäure in Schwefelsäure ist dadurch gekennzeichnet, daß man nach der Desulfonierung die schwefelsaure Lösung mit Wasser versetzt, das 4,4'-Diamino-1,1'-dianthrachinonyl als Sulfat isoliert, man das Sulfat, gegebenenfalls durch erneutes Lösen in Schwefelsäure und Austragen auf Wasser, hydrolysiert und man das Pigment isoliert.

Vorzugsweise Ausgestaltungen dieses Verfahrens sind:

1. Nach der Desulfonierung wird das Reaktionsgemisch auf 60 bis 120° C, besonders bevorzugt 90 bis 105° C, abgekühlt.

2. Der Ansatz wird nach der Desulfonierung bis zu einer Säurekonzentration von ≥ 50 %, besonders bevorzugt 60 bis 75 %, ganz besonders bevorzugt 62 bis 64 %, mit Wasser verdünnt, wobei die Säurekonzentration durch Titration des gesamten Reaktionsgemisches mit Natronlauge ermittelt wird.

3. Das Sulfat wird durch Absaugen isoliert und mit ca. 65 %iger Schwefelsäure kurz gewaschen.

4. Das isolierte Sulfat wird in Schwefelsäure bei 70 bis 120° C, vorzugsweise bei 80 bis 90° C, gelöst.

5. Die Hydrolyse des Sulfats erfolgt direkt, d.h. ohne vorheriges Lösen des Sulfats in Schwefelsäure, gegebenenfalls unter Zusatz von Alkali.

6. Die Hydrolyse des Sulfats wird unter Zusatz eines oberflächenaktiven Mittels durchgeführt.

7. Zur Herstellung eines deckenden Pigments wird die Lösung des Sulfats so auf Wasser ausgetragen, daß die Temperatur des Ansatzes zwischen 20 und 80° C, bevorzugt 20-50° C, liegt.

8. Zur Herstellung eines transparenten Pigments wird die Lösung des Sulfats so auf Eiswasser ausgetragen, daß die Temperatur des Gemischs 20° C, insbesondere 15° C, nicht übersteigt.

Durch Kombination der bevorzugten Verfahrensschritte 1 - 8 ergeben sich besonders bevorzugte Ausgestaltungen des erfindungsgemäßen Verfahrens.

Als oberflächenaktive Mittel, die bei der Hydrolyse des Sulfats gemäß 6 zugegeben sind eignen sich nichtionische, anionische und kationische oberflächenaktive Mittel.

Als nichtionische oberflächenaktive Mittel sind z.B. zu nennen:
$C_{12}$- bis $C_{20}$-Alkanole, N-Hydroxyalkyl-amide und N,N-Bishydroxyalkyl-amide von $C_{16}$- bis $C_{20}$-Carbonsäuren, Anlagerungsprodukte von Ethylenoxid an $C_{12}$- bis $C_{20}$-Alkanole, $C_{12}$- bis $C_{20}$-Fettsäuren, Amide, N-Hydroxy-$C_2$-bis $C_4$-alkamide und N,N-Bis-(hydroxy-$C_2$- bis $C_4$-alkyl)-amide von $C_{16}$- bis $C_{20}$ - Fettsäuren, $C_{12}$- bis $C_{20}$-Alkyl-amide, $C_8$- bis $C_{20}$-Alkylphenole und an Monoglyceride von Fettsäuren.

Als anionische oberflächenaktive Mittel kommen z.B. in Betracht:
$C_{13}$- bis $C_{18}$-Paraffinsulfonsäuren, $C_{13}$- bis $C_{18}$-Paraffindisulfonsäuren, Sulfobernsteinsäure-di-$C_1$- bis $C_8$-Alkylester, sulfiertes Ölsäuredibutylamid, $C_8$- bis $C_{18}$-Alkylbenzolsulfonsäuren, wie Octyl-, Nonyl-, Decyl-, Tetradecyl-, Hexadecyl-, Octadecyl- oder Dodecylbenzolsulfonsäuren, Mono- und Di-$C_3$- bis $C_8$-alkylnaphthalin-2-sulfonsäure, Kondensationsprodukte aus Naphthalin-2-sulfonsäure und/oder $C_1$- bis $C_4$-Alkylnaphthalinsulfonsäure und Formaldehyd, Kondensationsprodukte aus Phenolsulfonsäuren, Harnstoff und Formaldehyd, N-$C_{12}$-bis $C_{18}$-Alkyl-N-methyl-amino-essigsäuren, $C_{16}$- bis $C_{20}$-Fettsäuren, Abietinsäure, Kolophonium, hydriertes Kolophonium, dimerisiertes Kolophonium in Form der Ammonium- und/oder Alkalimetallsalze oder Gemische dieser Säuren.

Als kationische oberflächenaktive Mittel kommen z.B. in Betracht:

Quartäre Ammoniumverbindungen, wie Salze des Tri- ($C_1$-bis $C_4$-alkyl)benzylammoniums, des Di-($C_1$- bis $C_4$-alkyl)-dibenzyl-ammoniums, des $C_{10}$-bis $C_{20}$-Alkyl-tri-($C_1$- bis $C_4$-Alkyl)ammoniums, des Di-($C_{10}$- bis $C_{20}$-alkyl)-di-($C_1$-bis $C_4$-alkyl)-ammoniums, der quarternären Tri-$C_1$- bis $C_8$-alkyl)-ammoniumpolyglykolether, wie quarterniertes oxethyliertes Triethanolamin oder Tripropanolamin, N-$C_{10}$- bis $C_{16}$-Alkylpyridinium, Benzylpyridinium, N-$C_{10}$-bis $C_{18}$-Imidazolinium-Salze oder Gemische dieser Ammoniumverbindungen in Form der Chloride, Sulfate, Methylsulfate, Toluol- oder Benzolsulfonate.

Die Aufarbeitung des Pigments kann in üblicher Weise, z.B. durch Absaugen, Neutralwäsche mit Wasser und Trocknung erfolgen. Man erhält ein Pigment, das Lacke und Kunststoffe in klaren, brillanten und ausblutechten bzw. migrationsechten Tönen färbt.

Eine weitere vorzugsweise Ausgestaltung des erfindungsgemäßen Verfahrens besteht darin, daß man den vorzugsweise neutralen Pigmentpreßkuchen, das trockene Pigment oder den neutral gestellten Hydrolyseansatz einer Lösungsmittelbehandlung unterwirft.

Die Lösungsmittelbehandlung kann in Gegenwart eines Säurepuffers, wie Natriumacetat oder Trinatriumphosphat, erfolgen. Vorzugsweise behandelt man bei 60 bis 200°C, gegebenenfalls unter Druck. Bei der Herstellung eines deckenden Pigments beträgt die Behandlungszeit vorzugsweise etwa 2 bis etwa 12 Stunden; zur Herstellung eines transparenten Pigments behandelt man vorzugsweise 15-60 Minuten.

Beispiele für zur Behandlung geeignete organische Flüssigkeiten sind aliphatische Alkohole, insbesondere Alkanole mit 1 bis 10 C-Atomen und Alkandiolen mit 2 bis 3 C-Atomen wie Methanol, Ethanol, Butanol, Hexanol, Decanol, Ethylenglykol und Propylenglykol; Ester aliphatischer Carbonsäuren, insbesondere $C_1$-$C_4$-Alkylester von Alkancarbonsäuren mit 1 bis 8 C-Atomen wie Ameisensäuremethylester, Ameisensäureethylester, Essigsäuremethylester, Essigsäureethylester, Essigsäurepropylester, Essigsäurebutylester, Essigsäureamylester, Propionsäuremethylester, Propionsäureethylester, Buttersäuremethylester, Buttersäureethylester, Valeriansäuremethylester, Valeriansäureethylester, Adipinsäuredimethylester, Adipinsäurediethylester, Zitronensäuretriethylester; Formamide wie Formamid, N-Methylformamid und N,N-Dimethylformamid; Acetamide wie N-Methylacetamid, N,N-Dimethylacetamid, N-Ethylacetamid und N,N-Diethylacetamid; Amine wie Diethylamin, Triethylamin, Propylamin, Dipropylamin, Butylamin, Amylamin, Hexylamin, Ethylendiamin, Trimethylendiamin, Pentamethylendiamin, Ethanolamin, Triethanolamin und Pyridin; gegebenenfalls substituierte aromatische Kohlenwasserstoffe wie Benzol, niedere Alkylbenzole wie Toluol, Xylol, Ethylbenzol, Cumol und deren (technische) Gemische, Chlorbenzol, Dichlorbenzol, Trichlorbenzol und deren (technische) Gemische und Nitrobenzol.

Bevorzugt eingesetzt werden die Ester aromatischer Carbonsäuren, insbesondere die $C_1$-$C_4$-Alkylester von aromatischen Carbonsäuren, insbesondere von Benzol-mono- und -dicarbonsäuren, die durch Hydroxy substituiert sein können. Typische Beispiele sind die $C_1$-$C_4$-Alkylester von Benzoesäure, Salicylsäure und Phthalsäure wie Benzoesäuremethylester, Salicylsäuremethylester und Phthalsäuredimethylester.

Besonders gut zur Konditionierung von $4,4'$-Diamino-$1,1'$-dianthrachinonyl geeignet sind die Phthalsäureester.

Bevorzugt eingesetzt werden Phthalsäuredi-$C_1$-$C_4$-alkylester, insbesondere Phthalsäuredimethylester.

So ist ein neues Verfahren zur Herstellung von deckenden $4,4'$-Diamino-$1,1'$-dianthrachinonyl-Pigmenten dadurch gekennzeichnet, daß man bevorzugt den neturalen wäßrigen Preßkuchen des $4,4'$-Diamino-$1,1'$-dianthrachinonyls mit Phthalsäureester bei Temperaturen von etwa 70 bis etwa 150°C, vorzugsweise etwa 2 bis etwa 12 Stunden, gegebenenfalls unter Druck behandelt.

Ein neues Verfahren zur Herstellung von transparenten $4,4'$-Diamino-$1,1'$-dianthrachinonyl-Pigmenten ist dadurch gekennzeichnet, daß man bevorzugt den neutralen wäßrigen Preßkuchen des $4,4'$-Diamino-$1,1'$-dianthrachinonyls mit Phthalsäureestern bei Temperaturen um 100°C, vorzugsweise 15-60 Minuten, behandelt.

Die organische Flüssigkeit sollte im Konditionierungsmedium in Mengen von mindestens 0,05 Gew.-Teil, bezogen auf 1 Gew.-Teil trockenes Pigment, anwesend sein. Dieses Verhältnis kann in weiten Grenzen schwanken und is abhängig von der Art der jeweiligen organischen Flüssigkeit. Vorzugsweise werden etwa 0,1 bis etwa 100 Gew.-Teile, besonders bevorzugt etwa 0,2 bis etwa 50 Gew.-Teile organische Flüssigkeit, bezogen auf 1 Gew.-Teil trockenes Pigment, eingesetzt.

Bei Verwendung der Ester aromatischer Carbonsäuren werden beispielsweise bevorzugt 0,2 bis 4 Gew.-Teile, bezogen auf 1 Gew.-Teil trockenes Pigment, eingesetzt.

Vorzugsweise enthält das Behandlungsmedium weiterhin etwa 1 bis etwa 30 Gew.-Teile Wasser, besonders bevorzugt 3 bis 20, ganz besonders bevorzugt 5 bis 12 Gew.-Teile Wasser, bezogen auf 1 Gew.-Teil trockenes Pigment.

Nach Beendigung der Konditionierung wird das Pigment in üblicher Weise, z.B. durch Wasserwäsche oder Destillation mit oder ohne Dampf von der organischen Flüssigkeit befreit, wobei die Anwendbarkeit dieser Methoden von den Löslichkeitseigenschaften der organischen Flüssigkeit bestimmt wird. Von Carbonsäureestern kann das Pigment leicht durch Verseifung der Ester zu wasserlöslichen Carboxylaten befreit werden.

Gewünschtenfalls kann das Pigment noch nach üblichen Verfahren mit Harzen oder harzartigen Produkten belegt werden. Als Harze oder harzartige Produkte kommen insbesondere Harzsäuren wie Abietinsäure und ihre Isomeren sowie Derivate dieser Säuren, z.B. Salze der Abietinsäure, Abietensäureester, Oxidationsprodukte der Abietinsäure, Hydroabietinsäure, Dehydroabietinsäure sowie harzartige Produkte auf Basis dieser Verbindungen oder Kolophonium, das durch Di- oder Polymerisation, Hydrierung, Dehydrierung, Oxidation, Decarboxylierung, Verseifung oder Veresterung chemisch verändert worden ist sowie kolophoniummodifizierte Maleinatharze, Maleinatharze und Phenolharze in Frage.

Die erfindungsgemäß erhaltenen 4,4$'$-Diamino-1,1$'$-dianthrachinonyl-Pigmente sind sehr rein und farbstark und eignen sich besonders gut zur Einfärbung von Kunststoffen, wie Polyvinylchlorid, Polyethylen, Polyester o.ä., oder zur Pigmentierung von Einbrennlacken. Die transparenten Pigmentformen dienen insbesondere zur transparenten Masse- und Spinnfärbung von Thermoplasten. Die Pigmente zeigen eine sehr gute Dispergierbarkeit, ein sehr gutes Fließverhalten im Lack und liefern brillante und farbstarke Färbungen.

Die folgenden Beispiele veranschaulichen die Erfindung, ohne sie auf Einzelheiten zu beschränken.

Beispiel 1

70,9 g Dinatriumsalz der 4,4$'$-Diamino-1,1$'$-dianthrachinonyldisulfonsäure (100 %-ig), das in bekannter Weise, z.B. gemäß Beispiel 1 der DE-AS 1 205 215 erhalten worden ist, werden innerhalb von 15 bis 20 Minuten in 350 g auf 110°C erwärmte 78 %ige Schwefelsäure eingetragen. Es wird auf 140°C erwärmt und 5 Stunden bei dieser Temperatur gerührt.

Anschließend wird auf 100°C abgekühlt und durch Zutropfen von 69 ml Wasser das gelbe 4,4$'$-Diamino-dianthrachinonyl-sulfat ausgefällt. Die Titration der gesamten Schmelze mit Natronlauge ergibt 64 %. Das Sulfat wird abgesaugt und mit 13 ml 65 %iger Schwefelsäure gewaschen.

Der schwefelsaure Preßkuchen wird daraufhin in 141 g 96 %iger Schwefelsäure bei 80 bis 90°C gelöst und in 500 ml Wasser so eingerührt, daß die Temperatur des Ansatzes 40°C nicht übersteigt. Nach 1/2 Stunde Nachrührzeit wird abgesaugt und neutral gewaschen. Man erhält 160 g wasserfeuchten Preßkuchen mit einem Gehalt von 45,9 g 4,4$'$-Diamino-1,1$'$-dianthrachinonyl.

Zur Konditionierung werden 160 g wasserfeuchter Preßkuchen in 280 ml Wasser verrührt. Nach Zusatz von 11,2 g Natriumacetat und 14,8 g Phthalsäuredimethylester wird auf 100°C geheizt und 5 Stunden bei dieser Temperatur gerührt. Anschließend wird auf 80°C abgekühlt, mit 17 g 50 %iger Natronlauge versetzt und 2 Stunden bei 80°C verseift. Es wird abgesaugt, mit Wasser neutral gewaschen und bei 65 bis 70°C getrocknet.

Man erhält 45,9 g rotes 4,4$'$-Diamino-1,1$'$-dianthrachinonyl-Pigment, das beim Einfärben von Einbrennlacken einen sehr gut fließfähigen Lack, hohe Brillanz, ein gutes Deckvermögen und hohe Ausblutechtheit liefert.

Beispiel 2

Man arbeitet analog zu Beispiel 1, setzt jedoch statt Phthalsäuredimethylester 20 g Salicylsäuremethylester ein.

Das auf diesem Weg erhaltene Pigment zeigt ebenfalls in Einbrennlacken hohe Brillanz, gutes Deckvermögen und hohe Ausblutechtheit.

Beispiel 3

Man arbeitet analog Beispiel 1, setzt jedoch statt Phthalsäuredimethylester 25 g Benzoesäuremethylester ein und erhitzt 8 Stunden auf 100°C. Man erhält erneut beim Einfärben von Einbrennlacken hohe Brillanz, gutes Deckvermögen und hohe Ausblutechtheit bei sehr guter Fließfähigkeit des Lackes.

Beispiel 4

Man arbeitet analog Beispiel 1, verrührt jedoch den wasserfeuchten Preßkuchen des 4,4$'$-Diamino-1,1$'$-dianthrachinonyls in 300 ml Methanol und erhitzt 3 Stunden im Autoklaven auf 140°C.

Anschließend wird das Methanol abdestilliert, das Produkt abgesaugt, gewaschen und getrocknet.

Man erhält 46,2 g eines roten Pulvers, das beispielsweise in PVC eine sehr gute Dispergierbarkeit, hohe Farbstärke, Brillanz und Migrationsechtheit besitzt.

Beispiel 5

Man arbeitet analog Beispiel 4, setzt jedoch statt Methanol 200 g Butanol ein und erhitzt 6 Stunden auf 140°C.

Man erhält ein rotes Pulver, das beispielsweise in PVC ebenfalls eine sehr gute Dispergierbarkeit, hohe Farbstärke, Brillanz und Migrationsechtheit besitzt.

Beispiel 6

Der gemäß Beispiel 1 erhaltene schwefelsaure Preßkuchen wird in 141 g 96 %iger Schwefelsäure bei 80 bis 90°C gelöst und in 500 ml Eiswasser so eingerührt, daß die Temperatur des Ansatzes 15°C nicht übersteigt. Nach 1/2 Stunde Nachrührzeit wird abgesaugt und neutral gewaschen. Man erhält 160 g wasserfeuchten Preßkuchen mit einem Gehalt von 45,1 g 4,4'-Diamino-1,1'-dianthrachinonyl.

Zur Konditionierung werden 160 g wasserfeuchter Preßkuchen in 280 ml Wasser verrührt. Nach Zusatz von 11,2 g Natriumacetat und 14,8 g Phthalsäuredimethylester wird auf 100°C geheizt und 30 Minuten bei dieser Temperatur gerührt. Anschließend wird auf 80°C abgekühlt, mit 17 g 50 %iger Natronlauge versetzt und 2 Stunden bei 80°C verseift. Es wird abgesaugt, mit Wasser neutral gewaschen und bei 65-70°C getrocknet.

Man erhält 45,1 g rotes 4,4'-Diamino-1,1'-dianthrachinonyl-Pigment, das Polypropylen transparent einfärbt.

Beispiel 7

Das nach Beispiel 1 erhaltene 4,4'-Diaminodianthrachinonylsulfat wird zur Hydrolyse in 750 ml Wasser von Raumtemperatur verrührt, abgesaugt und mit Wasser neutral gewaschen. Der feuchte Nutschkuchen wird analog zu Beispiel 1 mit Phthalsäuredimethylester konditioniert.

Man erhält 46,0 g rotes 4,4'-Diamino-1,1'-dianthrachinonyl-Pigment, das beim Einfärben von Einbrennlacken einen sehr gut fließfähigen Lack, hohe Brillanz, ein gutes Deckvermögen und hohe Ausblutechtheit liefert.

Beispiel 8

Das nach Beispiel 1 erhaltene 4,4'-Diaminodianthrachinonylsulfat wird zur Hydrolyse in ein Gemisch aus 750 ml Wasser und 90 ml 50 %iger Natronlauge bei 10°C eingetragen und verrührt; anschließend wird der Reaktionsansatz auf pH 7 eingestellt. Ohne Zwischenisolierung des Pigments wird nun nach Zusatz von 11,2 g Natriumacetat und 14,8 g Phthalsäuredimethylester 30 min bei 100°C konditioniert und der Ansatz analog zu Beispiel 6 aufgearbeitet.

Man erhält 45,4 g rotes 4,4'-Diamino-1,1'-dianthrachinonyl-Pigment, das Polypropylen transparent einfärbt.

Patentansprüche

1. Verfahren zur Herstellung von 4,4'-Diamino-1,1'-dianthrachinonyl-Pigmenten durch Desulfonierung von 4,4'-Diamino-1,1'-dianthrachinonyl-3,3'-disulfonsäure in Schwefelsäure, dadurch gekennzeichnet, daß man nach der Desulfonierung die schwefelsaure Lösung mit Wasser versetzt, das 4,4'-Diamino-1,1'-dianthrachinonyl als Sulfat isoliert, man das Sulfat, gegebenenfalls durch erneutes Lösen in Schwefelsäure und Austragen auf Wasser, hydrolysiert, und man das Pigment isoliert.

2. Verfahren gemäß Anspruch 1, dadurch gekennzeichnet, daß man den Ansatz nach der Desulfonierung bis zu einer Säurekonzentration von $\geq$ 50 % mit Wasser verdünnt.

3. Verfahren gemäß Anspruch 1, dadurch gekennzeichnet, daß man den Ansatz nach der Desulfonierung bis zu einer Säurekonzentration von 60 bis 75 % mit Wasser verdünnt.

4. Verfahren gemäß Ansprüche 1-3, dadurch gekennzeichnet daß man die Hydrolyse im alkalischen Medium, gegebenenfalls unter Zusatz eines oberflächenaktiven Mittels durchführt.

5. Verfahren gemäß einen oder mehreren der Ansprüche 1 bis 4, dadurch gekennzeichnet, daß man das erhaltene Pigment einer Lösungsmittelbehandlung mit einer organischen Flüssigkeit aus der Reihe aliphatische Alkohole, Ester aliphatischer und aromatischer Carbonsäuren, Formamide, Acetamide, Amine, gegebenenfalls substituierte aromatische Kohlenwasserstoffe, gegebenenfalls in Gegenwart eines Säurepuffers, unterwirft.

6. Verfahren gemäß Anspruch 5, dadurch gekennzeichnet, daß man das erhaltene Pigment mit einem $C_1$-$C_4$-Alkylester einer aromatischen Carbonsäure behandelt.

7. Verfahren gemäß Anspruch 5, dadurch gekennzeichnet, daß man das erhaltene Pigment mit Phthalsäuredimethylester behandelt.

8. Verfahren gemäß einem oder mehreren der Ansprüche 5 bis 7, dadurch gekennzeichnet, daß man das Pigment als feuchten Preßkuchen in die Lösungsmittelbehandlung einsetzt.

9. Verfahren gemäß einem oder mehreren der Ansprüche 5 bis 8, dadurch gekennzeichnet, daß man, bezogen auf 1 Gew.-Teil trockenes Pigment, 0,05 bis 100 Gew.-Teile Lösungsmittel einsetzt.

**10.** Verfahren gemäß einem oder mehreren der Ansprüche 5 bis 8, dadurch gekennzeichnet, daß das Behandlungsmedium, bezogen auf 1 Gew.-Teil trockenes Pigment, 2 bis 20 Gew.-Teile Wasser enthält.

**Claims**

**1.** Process for preparing 4,4'-diamino-1,1'-dianthraquinonyl pigments by desulphonation of 4,4'-diamino-1,1'-dianthraquinonyl-3,3'-disulphonic acid in sulphuric acid, characterised in that after the desulphonation water is added to the sulphuric acid solution, 4,4'-diamino-1,1'-dianthraquinonyl is isolated as sulphate, the sulphate is hydrolysed, if necessary by redissolving it in sulphuric acid and adding the solution to water, and the pigment is isolated.

**2.** Process according to Claim 1, characterised in that after the desulphonation the batch is diluted with water to an acid concentration of ≧ 50%.

**3.** Process according to Claim 1, characterised in that after the desulphonation the batch is diluted with water to an acid concentration of 60 to 75%.

**4.** Process according to Claims 1-3, characterised in that the hydrolysis is carried out in an alkaline medium, if necessary with the addition of a surfactant.

**5.** Process according to one or more of Claims 1 to 4, characterised in that the pigment obtained is subjected to a solvent treatment with an organic liquid from the series comprising aliphatic alcohols, esters of aliphatic and aromatic carboxylic acids, formamides, acetamides, amines, and optionally substituted aromatic hydrocarbons, if desired in the presence of an acid buffer.

**6.** Process according to Claim 5, characterised in that the pigment obtained is treated with a $C_1$-$C_4$-alkyl ester of an aromatic carboxylic acid.

**7.** Process according to Claim 5, characterised in that the pigment obtained is treated with dimethyl phthalate.

**8.** Process according to one or more of claims 5 to 7, characterised in that the pigment is used as a moist press-cake in the solvent treatment.

**9.** Process according to one or more of Claims 5 to 8, characterised in that 0.05 to 100 parts by weight of solvent are used per part by weight of dry pigment.

**10.** Process according to one or more of Claims 5 to 8, characterised in that the treating medium contains 2 to 20 parts by weight of water per part by weight of dry pigment.

**Revendications**

**1.** Procédé de production de pigments 4,4'-diamino-1,1'-dianthraquinonyliques par désulfonation d'acide 4,4'-diamino-1,1'-dianthraquinonyl-3,3'-disulfonique dans l'acide sulfurique, caractérisé en ce qu'après la désulfonation, on ajoute de l'eau à la solution d'acide sulfurique, on isole la portion 4,4'-diamino-1,1'-dianthraquinonylique sous forme de sulfate, on hydrolyse le sulfate, éventuellement en le redissolvant dans l'acide sulfurique et en versant la solution sur de l'eau, et on isole le pigment.

**2.** Procédé suivant la revendication 1, caractérisé en ce qu'on dilue la charge après la désulfonation jusqu'à une concentration en acide supérieure ou égale à 50 % avec de l'eau.

**3.** Procédé suivant la revendication 1, caractérisé en ce qu'on dilue la charge après la désulfonation jusqu'à une concentration en acide de 60 à 75 % avec de l'eau.

**4.** Procédé suivant les revendications 1 à 3, caractérisé en ce qu'on conduit l'hydrolyse en milieu alcalin, le cas échéant avec addition d'un agent tensioactif.

**5.** Procédé suivant une ou plusieurs des revendications 1 à 4, caractérisé en ce qu'on soumet le pigment obtenu à un traitement par un solvant avec un liquide organique de la série des alcools aliphatiques, des esters d'acides carboxyliques aliphatiques et aromatiques, des formamides, des acétamides, des amines, des hydrocarbures aromatiques éventuellement substitués, le cas échéant en présence d'un tampon acide.

**6.** Procédé suivant la revendication 5, caractérisé en ce qu'on traite le pigment obtenu avec un ester d'alkyle en $C_1$ à $C_4$ d'un acide carboxylique aromatique.

**7.** Procédé suivant la revendication 5, caractérisé en ce qu'on traite le pigment obtenu avec l'ester diméthylique de l'acide phtalique.

8. Procédé suivant une ou plusieurs des revendications 5 à 7, caractérisé en ce qu'on introduit le pigment dans le traitement au solvant sous forme d'un gâteau de presse humide.

9. Procédé suivant une ou plusieurs des revendications 5 à 8, caractérisé en ce qu'on utilise 0,05 à 100 parties en poids de solvant pour une partie en poids de pigment sec.

10. Procédé suivant une ou plusieurs des revendications 5 à 8, caractérisé en ce que le milieu de traitement, par rapport à une partie en poids de pigment sec, contient 2 à 20 parties en poids d'eau.